Europäisches Patentamt

European Patent Office

Office européen des brevets

(11) Publication number: **0 399 087**

**A1**

(12) # EUROPEAN PATENT APPLICATION

(21) Application number: **89111171.8**

(22) Date of filing: **20.06.89**

(51) Int. Cl.5: **F16K 1/42, F16K 41/02**

(30) Priority: **24.05.89 ES 8901764**

(43) Date of publication of application:
**28.11.90 Bulletin 90/48**

(84) Designated Contracting States:
**AT BE CH DE ES FR GB GR IT LI LU NL SE**

(71) Applicant: **Suarez Menendez, Alfredo**
**Calle Hermanos Machado, 18-1**
**E-24009 Leon(ES)**

(72) Inventor: **Suarez Menendez, Alfredo**
**Calle Hermanos Machado, 18-1**
**E-24009 Leon(ES)**

(74) Representative: **Grättinger, Günter**
**Wittelsbacherstrasse 5 Postfach 16 49**
**D-8130 Starnberg(DE)**

(54) **Detachable body seat globe valve.**

(57) DETACHABLE BODY SEAT GLOBE VALVE
which may be installed in all kind of medium and
high pressure circuits at any temperature and for all
kind of circulatingfluids: water, steam, gases, etc.,
which may be repaired on the spot however spoiled
their seats be, both that of the disc and of the body
seat, without being required to cut it off from the
pipeline, being able to take off the stem and disc
assembly without being required to first take the
gasketing (7) off, distroying it as it happens in the
conventional globe valves. It is of easy assess to the
body seat (1) and the disc seat (2). The graphite
rings gasketing (7) with inhibitor continues in its
housing (gasket box) and may be used again without
the slightest damage. It incorporated as substitution
of the stellite seat welded to the body, a seat which
being incorporated to the valve body (4) does not
form a part thereof.

EP 0 399 087 A1

## DETACHABLE BODY SEAT GLOBE VALVE

The specification discussed hereinafter corresponds to a Patent of Invention regarding a SEAT GLOBE with DETACHABLE body to be installed in all kind of medium and high pressure circuits, at any temperature and applicable to all kind of circulating fluids, be they water, steam, gases, etc.

This new definition and presentation of the DETACHABLE BODY SEAT GLOBE VALVE presents a considerable advantage in regard with previous globe valves which are gathered and mentioned in the state of art, since none of them comprises the specification of a detachable body.

The valve globe being the subject matter of this present patent of invention may be constituted by a straight body or a tilted body, commonly designed as an Y body.

Standard dimensions therein will comprise from $\frac{1}{2}$ " through $2\frac{1}{2}$ " (DN 15 through DN 65) with connections at the ends of the socket weld type and 3" (DN 80) with connections of the but weld type.

The pressure range comprises all medium and high pressure values including the super critical pressure. It incorporates as substitution for the stellite welded onto the body, a seat which although linked to the valve body does not form a part thereof.

The most important specification in this invention consists in the possibility of repairing the valve on the spot without being required to cut it off from the pipeline where it is installed.

The seats geometrical shape may be tilted or horizontal straight, in both cases they will be stellited with a hardness degree variable according with the requirements.

The disc seat is incorporated to a stem having enough mobility to insure a fluid staunch closing even in those cases of maximum body deformation, due to the variation of the circulation fluid, as well as to the tensile and compression strengths provoked by the contractions and dillatations of the pipeline itself where it is installed.

The valves may be manufactured in standard classes with materials A-105 forged and class A182-F22 forged. It may also be used special materials such as AISI-304, AISI-316, etc.

In order to avoid eventual problems of the oxidation-electrolytic reduction type, since two different materials are in contact, it has been previewed to build the mobile seat in the same material as that of the valve body.

To make understanding the function, shape and physical specifications of the invention easier, if at all possible, this present specification has attached a faithful graphic representation of the DETACHABLE BODY SEAT GLOBE VALVE comprising only one figure where it is shown in section, without dimensions and with its actual aspect, referencing therein all characteristic elements, which will enable us, at the same time, to describe its function.

In this way it may be seen how the body seat (1) and the disc seat (2) may be taken off the valve body (4) by first taking off the stopper (5).

Once the stopper (5) has been taken out and having undone the screw (6) allowing the graphite gasketing (7) expansion we continue closing the valve by means of the handle (10) until the seat (1) protrudes to the outside.

The valve maneouvre is very soft due to the axial bearings (8) incorporated in a special part which nests in the head (9) of the upper part which, at the same time, holds the control handle (10).

This disposition of the assembly (8), (9) and (10) allows moving the stem up and down without turns, thus avoiding causing damages to the gasketing (7) and making it more staunch.

Thus if, for instance, we wish to check the seats status, it may be made by simply driving off at once all parts comprising the valve upper part, being enough for this to undo the assembly formed by part (11) of body (4).

A set of gaskets (12), (13), (14) make the assembly staunch.

An antifriction ring (15) allows sliding the stopper (5) and compressing the seat (1) without transmitting any torsion to it.

What has been described up to here clearly evidences the easiness of this procedure and the enormous economy that it affords both in method-time as in the possibility of recovering valves of this new type, in comparison with those known up to now which, in may cases, must be discarded either due to the impossibility of repairing them or due to unsatisfactory repairs, without mentioning that, besides, there is a very serious eonomical trouble if some installations must be stopped and left out of service while the damaged valves are repaired, which takes some time.

It is obvious that the GLOBE VALVE being the subject of this invention, with its DETACHABLE body seat, incorporates a fundamental and absolutely innovating advantage as is the possibility of having it repaired on the spot, however damaged their seats are both in the disc as in the body seat, not being required to cut it off the pipeline wherein it is installed, procedure which until this invention materialized was absolutely unknow, thus the absolute novelty and innovation thereof.

It is deemed that no further description is required for an expert in this field to perfectly understand the scope of this invention and the advantages it offers.

The materials, shape, size and disposition of the elements will be susceptible of variation, providing it does not mean any alternation of the invention essential.

The terms with which this specification has been described should be taken is their widest non limitative sense.

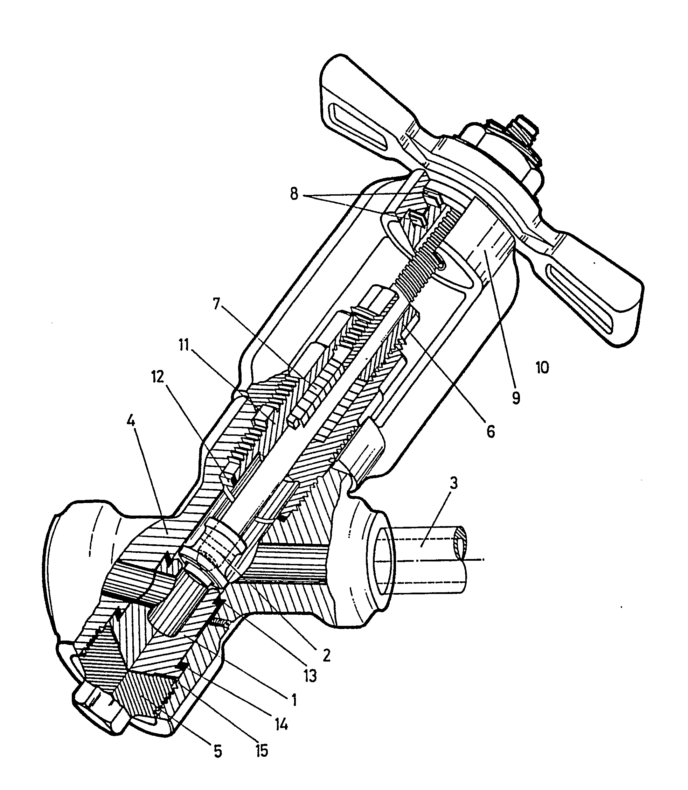

## Claims

1. DETACHABLE BODY SEAT GLOBE VALVE, characterized by the fact that it is fitted with of a detachable body seat to be installed in all kind of medium and high pressure circuits, at any temperature, and applicable to all kind of circulating fluids, be them either water, steam, gases, etc.

2. DETACHABLE BODY SEAT GLOBE VALVE, according with claim 1, characterized by the fact that it is fitted with the possibility of being repaired on the spot, however damaged their seats are both in the disc as in the body seat, not being required to cut it off the pipeline wherein it is installed, by only taking out the stopper.

3. DETACHABLE BODY SEAT GLOBE VALVE, according with previous claims, characterized by the fact that it is fitted with a seat incorporated to the valve body although not forming a part thereof, as substitution for the stellite seat welded onto the body.

4. DETACHABLE BODY SEAT GLOBE VALVE, according with previous claims, characterized by the fact that the stem and disc assembly may be taken off the valve without being required to take off first the gasketing, thus destroying it.

5. DETACHABLE BODY SEAT GLOBE VALVE, according with previous claims, characterized by the fact that it is easily disassembled to accede to its inside, where no damage is produced to the gasketing, since the threaded stem diameter is slightly smaller than the remaining diameter not making any friction, therefore, with the graphite rings during their assembly and disassembly.

| DOCUMENTS CONSIDERED TO BE RELEVANT | | | EP 89111171.8 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | <u>GB - A - 2 859 A.D.1904</u><br>(BRADSHAW)<br>* Totality *<br>-- | 1-5 | F 16 K   1/42<br>F 16 K 41/02 |
| A | <u>US - A - 2 274 876</u><br>(TROTT)<br>* Fig. 1, belonging text *<br>-- | 1,3-5 | |
| A | <u>DE - C - 830 271</u><br>(GERDTS)<br>* Totality *<br>-- | 1,2 | |
| A | <u>GB - A - 303 770</u><br>(MASON)<br>* Totality *<br>---- | 1 | |

| | | | TECHNICAL FIELDS SEARCHED (Int. Cl.4) |
|---|---|---|---|
| | | | F 16 K   1/00<br>F 16 K 27/00<br>F 16 K 41/00 |

The present search report has been drawn up for all claims

| Place of search<br>VIENNA | Date of completion of the search<br>29-09-1989 | Examiner<br>ROUSSARIAN |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82